# EUROPEAN PATENT APPLICATION

(11) **EP 3 885 257 A1**
(43) Date of publication of application: **29.09.2021**
(21) Application number: 21164652.6
(22) Date of filing: 24.03.2021
(51) Int. Cl.: B64C 27/20, B64C 27/28, B64C 27/32, B64C 27/52, B64C 29/00

(54) **AIRCRAFT EQUIPPED WITH A PROPULSION SYSTEM WITH COUNTER-ROTATING PROPELLERS**

(30) Priority: 24.03.2020 IT 202000001273 U
(71) Applicant: Sforza, Maurizio, 00137 Roma (IT)
(72) Inventor: Sforza, Maurizio, 00137 Roma (IT)
(74) Representative: De Tullio, Michele Elio

(57) **Abstract**

The present invention relates to an aircraft provided with a propulsion system comprising a housing (2) provided in its inside with at least one first propeller and one second propeller (3, 3') configured to rotate opposite each other; each of the first and second propeller being connected to an independent engine (4) and to its corresponding power supply.

Each of the first and second propellers (3, 3') is configured to be independently orientable by being rotated around two mutually orthogonal axes. In this way, it is possible to vary the direction of the aircraft.

## Description

### Field of the invention

The present invention relates to an aircraft equipped with a propulsion system. In particular, the present invention relates to an aircraft which comprises a housing provided inside it with at least a first propeller and a second propeller configured to rotate one opposite the other.

### Description of the known art

In the history of aviation, the design of the aircraft has undergone few and slow changes, always having to respect the laws of aerodynamics as well as the strict needs of the manufacturer.

A first revolution involved the birth of the helicopter between the end of the 40s and the early 50s of the last century. Born from different needs compared to the plane, it had on its side compared to the competition a great capacity of adaptability for departures and landing as well as a great maneuverability combined with a considerable load capacity, that for an aircraft would have required logistic and production problems. As far as the thrust vector is concerned, jet engines made their first appearance already in the middle of World War II, but even after the appearance of the turbine as a thruster, a great revolution was the so-called "counter-rotating propeller" invented by the Soviets in the second half of the 1950s. This innovation led to a greater performance of the propellers as it was able to introduce much of the air dispersed by the first series of propellers into the flow that characterized the speed.

However, the technical problem of this technology was a greater constructive fragility which did not always make it useful. In recent years, helicopters have also offered this solution, but always respecting the traditional design of both the cockpit and the blades.

Furthermore, in the solutions used in the aircraft known in the art, the air flow used for the movement of the propellers was made to leave the aircraft in a single direction, passing through suitable openings for the air outlet.

The aim of the present invention is therefore to solve the aforesaid drawbacks in order to provide a propulsion system which is efficient and simple to make.

### Summary of the invention

The present invention relates to a propulsion system as indicated in claim 1.

The Applicant of the present application has in fact surprisingly found that the technical problem encountered above can be solved in an effective and reliable way by means of an aircraft equipped with a propulsion system which comprises a housing provided inside it with at least a first propeller and with a second propeller (blade) capable of rotating one opposite the other, in which each of said first and second propellers is connected to an independent thrust vector and to a corresponding power supply thereof.

In this way, having two independent thrust vectors, it is possible to vary the speed and the lift of the two counter-rotating propellers, so avoiding the drift of the aircraft in one direction or another.

According to a preferred embodiment, each of said first and second propellers has an independent mobility with respect to two mutually orthogonal axes.

In this way, the ability to rotate on two axes by the thrust vectors fed by independent engines and turbines allows the direction of the aircraft to be varied.

According to a preferred embodiment, the size of said housing are such as to allow the maximum extension of each of said first and second propellers to the inside and to allow the transfer of the airflow emitted from each of said propellers entering the other propeller, and vice versa.

In this way, this housing is much wider than the maximum propeller extension as to allow the extraction of all the air flows on the opposite series, depending on the variable lift of the propellers.

According to a preferred embodiment, said housing and with it said first and second propellers contained inside it, is able to incline itself compared to the aircraft floor and to be disposed both on the vertical and the horizontal plane.

In this way the aircraft can change direction as needed.

According to a preferred embodiment, the aircraft further comprises at least a first opening for the air outlet positioned in correspondence with the rear part of the aircraft and at least a second opening for the air outlet positioned in correspondence with the lateral part of the aircraft.

In this way, by exiting with different directional jets, it is possible to manage the lift and vary the aerodynamic flow.

According to a preferred embodiment, said aircraft includes mobile and telescopic modular parts configured to allow said housing to be mobile and to assume various dispositions and inclinations.

According to a preferred embodiment, the fuselage of the aircraft of the present invention is provided on its outer surface of extensible appendages.

In this way it is possible to increase the lift.

According to a preferred embodiment, said extensible appendages are able to move along suitable guides.

According to a preferred embodiment, said fuselage is configured to extend upwards.

In this way this increases the load capacity.

According to a preferred embodiment, the aircraft of the present invention also comprises wings and other aeronautical components provided with modular elements able to move in an integral manner with respect to said housing.

In this way it is possible to better manage the aerodynamic flow for greater reaction and performance of the same in order to increase the wing loading.

In addition, the modularity and the mobility of these wing parts can also increase the space or can be dedicated to bringing people and objects inside the aircraft by increasing the internal surface.

According to a preferred embodiment, said wings and other aeronautical components are of the mobile, retractable, telescopic, modular type, extendable through mechanical or chemical systems.

According to a preferred embodiment, said wings and other aeronautical components are moving on the circumference of the frame according to the displacement of said housing and the output of the air flow.

According to a preferred embodiment, said wings and other aeronautical components are moving on the circumference of the frame up to 90° with respect to the longitudinal direction of displacement of the aircraft.

In this way, the lateral wing parts can be rotated up to the point of mutual meeting and be frontally arranged with respect to the advancement direction of the aircraft; therefore, they can move within the perimeter of the frame to find a better position for aerodynamic needs.

According to a preferred embodiment, the aircraft is provided with additional wings so as to generate additional lift.

In this way the profile of the aircraft changes, as the wings are raised from the frame itself. This is particularly useful for an aircraft provided with a considerable lifting capacity, as it can have a more or less greater aerodynamic load, for example, during the take-off or the landing phase, or following a speed or climate variation, or even when the aircraft has to brake or offer less resistance to the air flow or manage the air flow in a different way in space and time according to the needs.

According to a preferred embodiment, each of said independent thrust vectors can be a rotor or a turbine.

According to a preferred embodiment, the aircraft of the present invention also comprises at least one rail configured to allow the horizontal movement of each corresponding thrust vectors.

According to a preferred embodiment, said rotor or turbine is able to move both along their axes or guides, or is integral with said wings or other aeronautical components.

In this way the aeronautical needs are exploited to the maximum.

According to a preferred embodiment, the aircraft of the present invention further comprises at least one tail stabilizer or a corresponding rotor configured to rotate on its horizontal axis.

In this way, the stabilizer provided with rotor, by rotating on itself, is able both to follow the direction of the aircraft when the housing changes its direction, and to act as a main thrust vector along the new direction of the aircraft.

According to a preferred embodiment, the aircraft of the present invention further comprises at least one additional rotor or turbine.

In this way it is possible to balance the aircraft in case of difference in the rotation speed of the main rotors.

According to a preferred embodiment, also each of said at least one added rotor or turbine is able to move on its own axis along suitable guides.

According to a preferred embodiment, each of said additional rotor or turbine is positioned in the rear part of the aircraft with a counter-rotating direction between them.

According to a preferred embodiment, each of said additional rotor or turbine may be arranged also in suitable portions of the wings or of other moving parts, which can move both horizontally and vertically on their axis.

In this way it is possible to use said additional turbines either in particular emergency situations or when the wing housing the additional turbine tilts on itself, as they can offer very interesting additional thrust vector situations.

According to a preferred embodiment, the loading spaces of said aircraft are located outside said housing.

In this way the space available to the load is increased.

According to a preferred embodiment, the aircraft is further provided of slits that allow the entry and the management of the air flow and are arranged both through the same fuselage and through the wings.

In this way, a greater air flow is made available which is used for the generation of motion of one or more turbines.

According to a preferred embodiment, said aircraft and the provided additional and movable parts have a flat outer surface.

In this way it is possible to exploit the Magnus effect both on a static surface and on an amplified one, where the Magnus effect is defined as the variation of the trajectory of a rotating body in a fluid in motion.

Other advantages and characteristics of the system of the present invention will become evident from the following detailed description of some embodiments, given by way of non-limiting example and with particular reference to the tables and figures, in which:
- Figure 1 shows an axonometric view a part of an embodiment of an aircraft according to the present invention;
- Figure 2 shows the part shown in Figure 1 with the addition of the fuselage and of additional turbines;
- Figure 3 shows a detail of Figure 1 or 2 wherein the housing that houses the propellers has assumed an inclined position;
- Figure 4 shows a side view of the aircraft of Figure 1-3 in which the rotation is visible of the blocks of rotors and propellers in different directions and in an asynchronous way;
- Figure 5 shows in detail the rotation of the block of rotors of Figure 4 with respect to the vertical axis;
- Figure 6 shows in detail the rotation with respect to the horizontal axis of the block of rotors of Figure 4;
- Figure 7a shows a side view of the aircraft of Figure 1-3 in which two blocks of the rotating and independent propellers are visible;
- Figure 7b shows the wing blocks of Figure 7 submitted to rotation;
- Figure 8a shows a side view of the aircraft of Figure 1-3 in which the rotation of the two rotor blocks in the opposite direction is shown;
- Figure 8b shows from above the rotation of Figure 8a;
- Figure 9 shows a detail of Figure 1-3 in which the guides on which the turbines slide are visible;
- Figure 10a shows a front view of the aircraft of Figure 1-3 in which in detail the movable wings are visible;
- Figure 10b shows a top view of the aircraft of Figure 1-3 in which the moving appendages of the wings are visible in detail;
- Figures 11a and 11b show a top view of the aircraft of Figure 1-3 in which the movable wings are visible which are respectively open and closed;
- Figure 12 shows a front view of the aircraft of Figure 1-3 in which the additional wings for generating additional lift are visible;
- Figure 13 shows a front view of various alternative embodiments of the aircraft of the present invention, in which a plurality of additional turbines are visible, arranged in various ways in correspondence with the additional movable wings;
- Figure 14 shows a front view of the aircraft of Figure 1-3 in which the openings for the direct entry of air to the turbines are visible;
- Figure 15 shows a side view of the aircraft of Figure 1-3 in which the rotation of the blocks of rotors and propellers in different directions and in an asynchronous way is visible;
- Figure 16 shows a top view of the aircraft of Figure 1-3 in which the movable wings are visible that are respectively open and closed;
- Figure 17a shows a sectional view of the aircraft of Figure 1-3 by highlighting movable walls for increasing the air pressure and Figure 17b shows a top view of the aircraft by highlighting supplementary rotors for balancing the aircraft;
- Figures 18a, 18b and 18c show a front view of the aircraft of Figure 1-3 in which the telescopic wings are visible, that are respectively closed, open, open and extended;
- Figure 19 shows a detail of Figure 1-3 in which the movable wing is visible;
- Figure 20 shows a detail of aerodynamic part of the aircraft according to Figures 1-3;
- Figure 21 shows a detail of aerodynamic parts of the aircraft according to Figures 1-3;
- Figure 22 shows a side view of the aircraft of Figure 1-3 in which the openings for the direct entry of air to the turbines are visible;
- Figure 23 shows a top view of the aircraft of Figure 1-3 in which the extensible appendages of the wings are visible in detail;
- Figure 24a shows a side view of the aircraft of Figure 1-3 in which the movable wings are visible. Figures 24b and 24c show a front view of the aircraft of Figure 1-3 in which the movable appendages are visible in detail that are respectively closed and open;
- Figures 25a, 25b and 25c show side views (to the left) and front views (to the right) of various alternative embodiments of the movable wings of the aircraft of the present invention, with respective air flows;
- Figures 26a and 26b show front views (to the left) and side views (to the right) of an alternative embodiment for the supplementary vertical tail of the aircraft of the present invention, respectively in a closed and open shape;

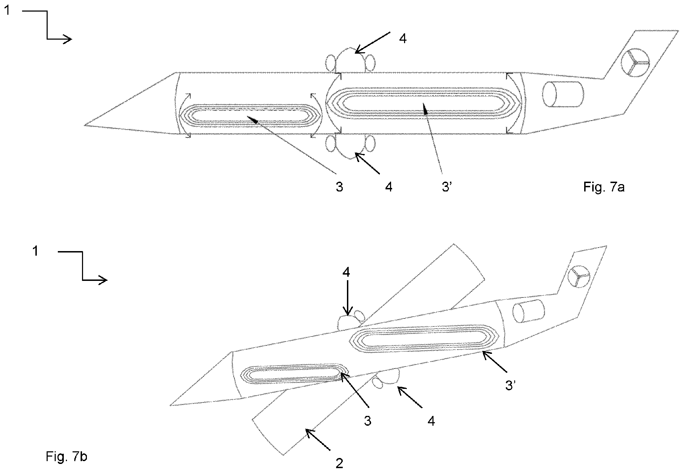

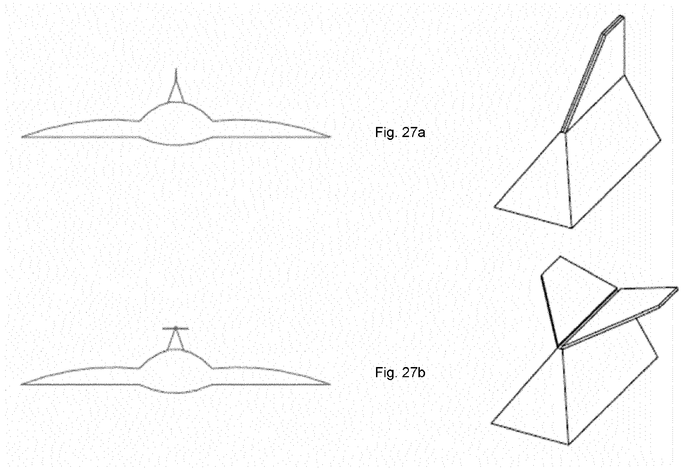

- Figures 7a and 27 b show front views (to the left) and side views (to the right) of an alternative embodiment of the aircraft stabilizers of the present invention, respectively in an open and closed shape;

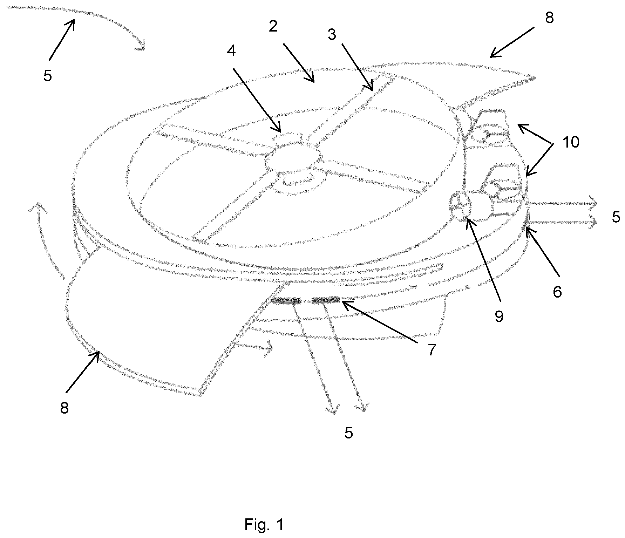

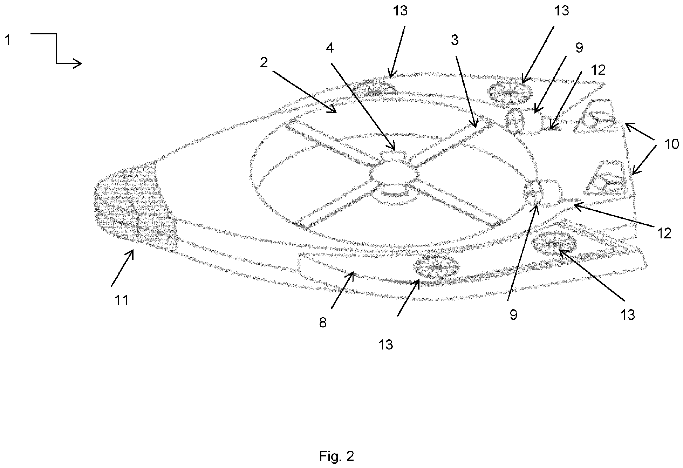

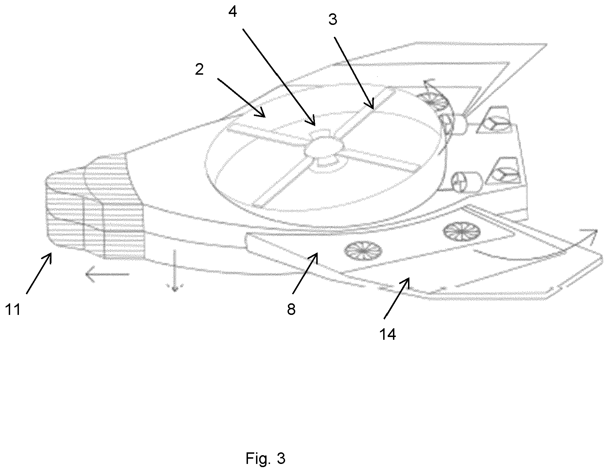

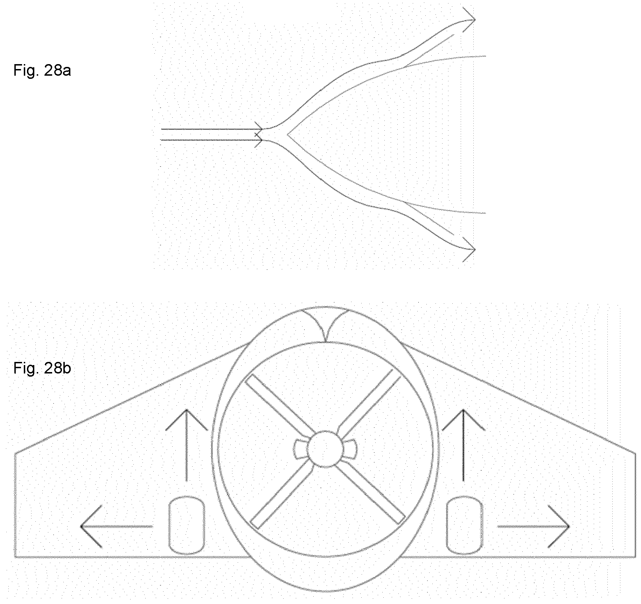

- Figures 28a and 28b show a detail from above of Figures 1-3 in which respectively the air flow and the turbines are visible that are running on guides (not visible);

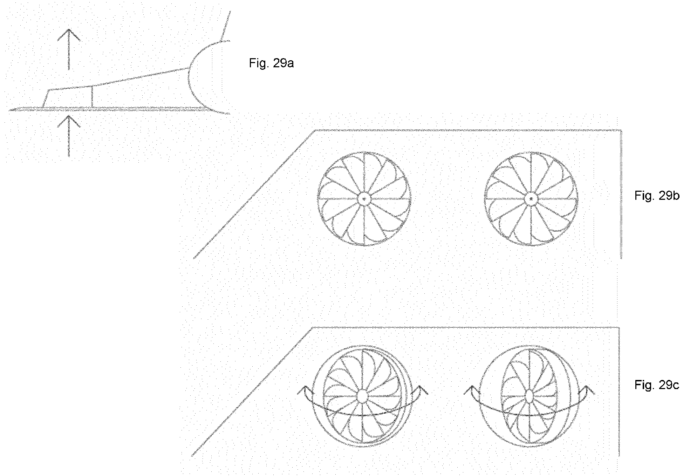

- Figures 29a and 29b respectively show a detail of the turbines in a front and top view according to the aircraft of Figures 1-3;

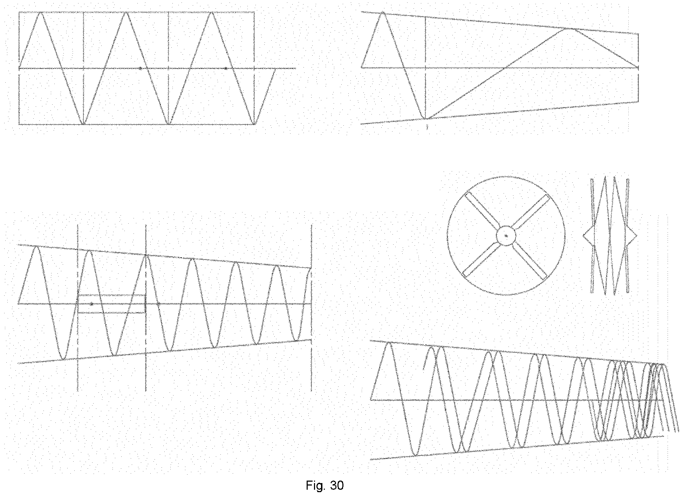

- Figure 30 shows in various alternative embodiments of the aircraft of the present invention, in the case of a support of the aircraft on the water;

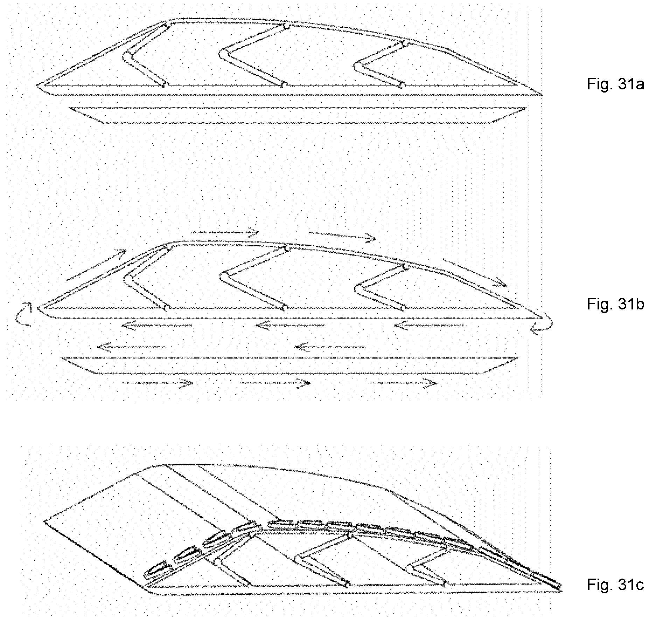

- Figures 31a, 31b and 31c show various alternative embodiments of the aircraft of the present invention with the application of the Magnus effect on the profiles. Figure 31a shows an embodiment of the profile with visible internal leaf springs, Figure 31b shows the counter-rotation profiles, Figure 31c shows various embodiments of the profile either with flat surface or with grooves;

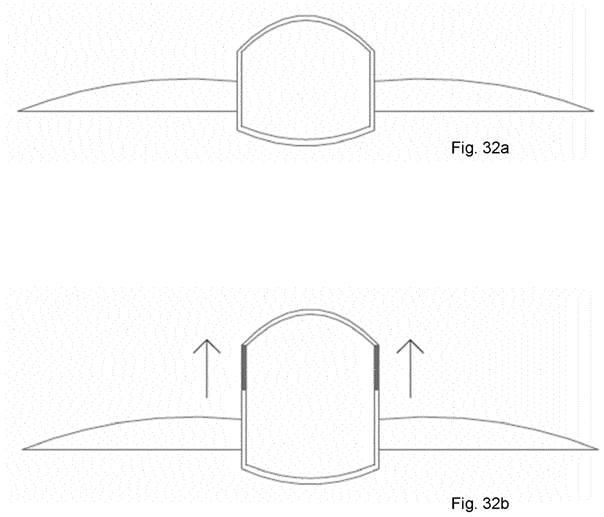

- Figures 32a and 32b show a front detail of the aircraft of Figures 1-3 in which the upward extendable fuselage to generate additional lift, respectively in a closed and open position;

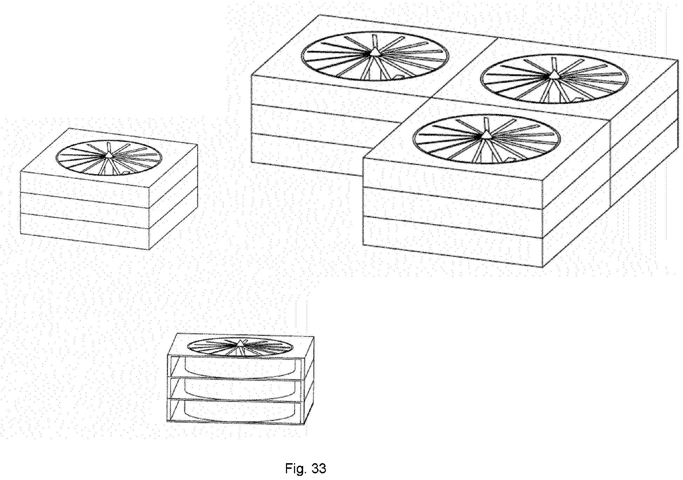

- Figure 33 shows various alternative embodiments of the aircraft of the present invention in which a plurality of modular turbines are combined with each other;

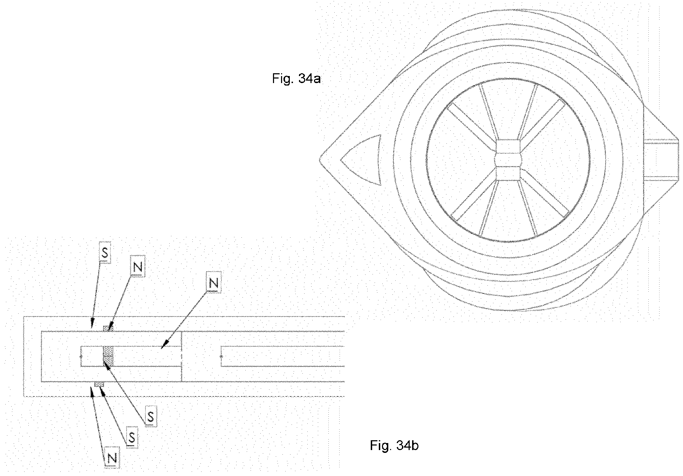

- Figures 34a and 34b show an alternative embodiment of the aircraft of the present invention, in which thrust vectors are electromagnetic counter-rotating vectors, provided with a positive pole and a negative pole;

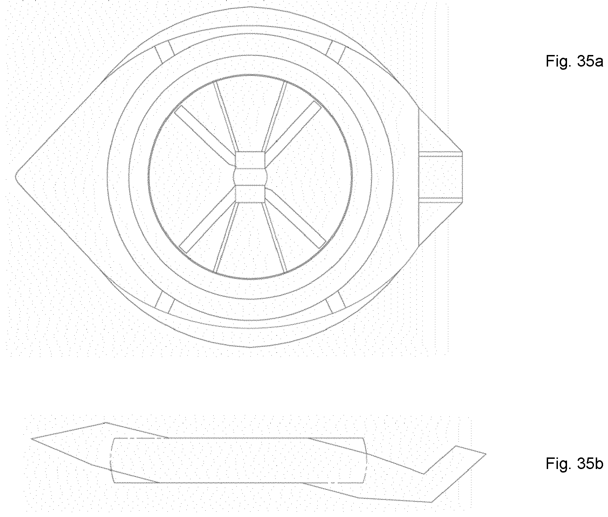

- Figures 35a and 35b show an alternative embodiment of the aircraft of the present invention;

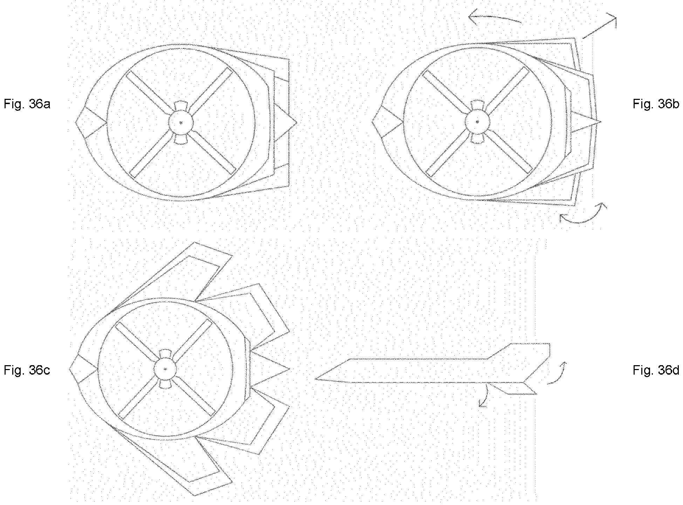

- Figures 36a, 36b and 36c show a top view of the aircraft of Figures 1-3 in which the movable wings are visible, respectively in the closed, open and extended condition;
- Figure 36d shows a side view of the aircraft of Figures 1-3;

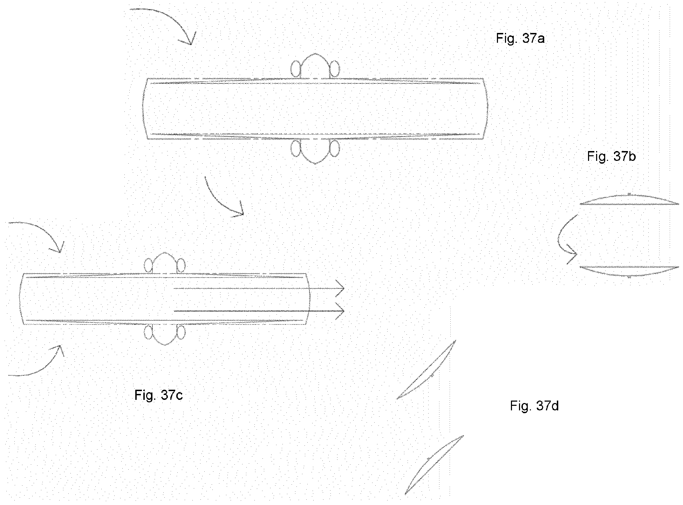

- Figures 37a and 37c show a side view of the aircraft of Figures 1-3 in which the flow and the aerodynamic load are highlighted;
- Figures 37b and 37d show a detail of the load profile in a side view of the aircraft of Figures 1-3;

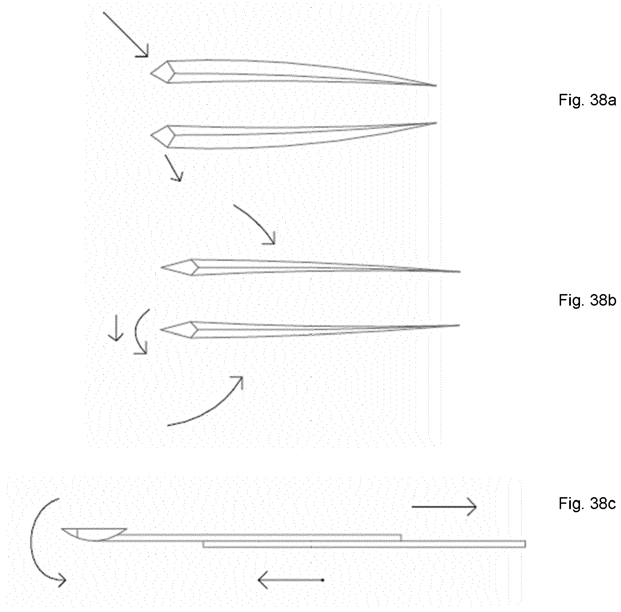

- Figures 38a, 38b and 38c show a detail of the aircraft of Figures 1-3, with various embodiments of the counter-rotating rotor blade.

### Detailed description of the invention

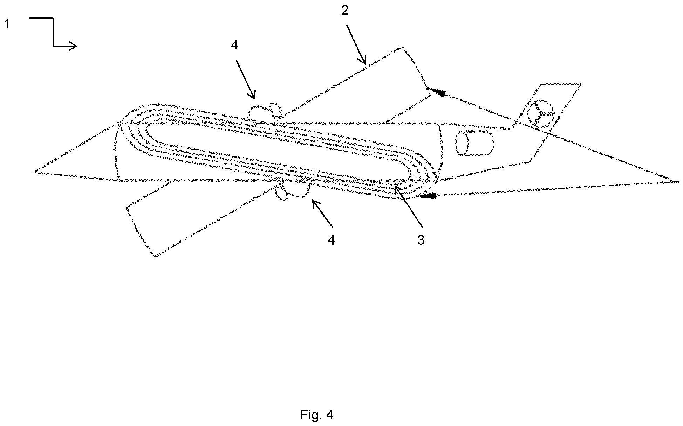

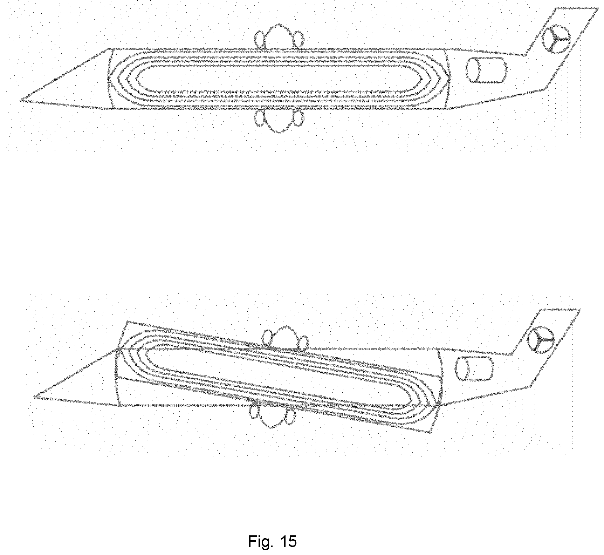

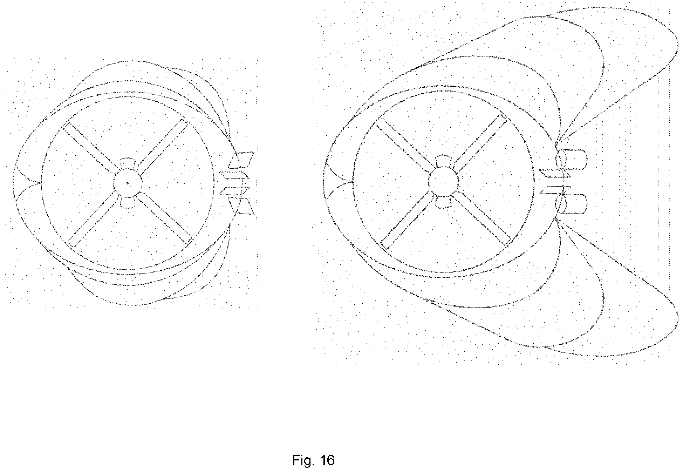

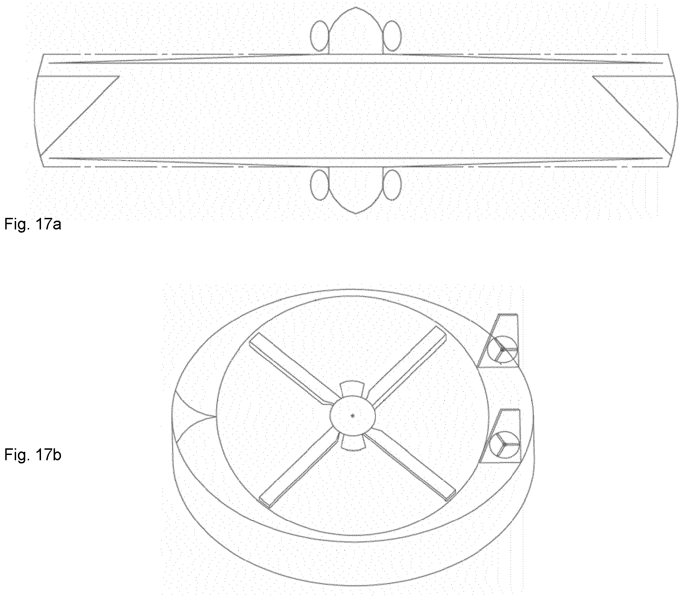

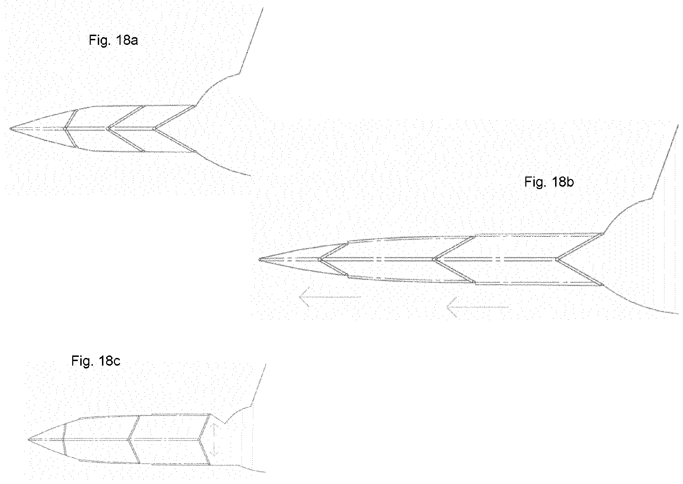

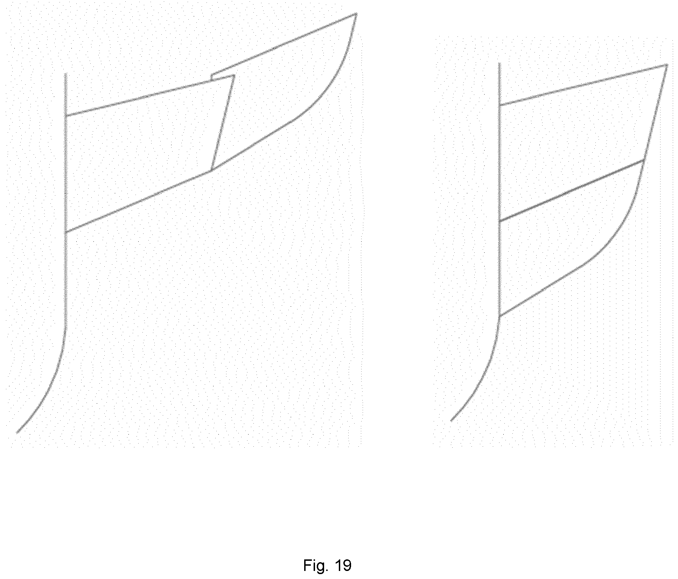

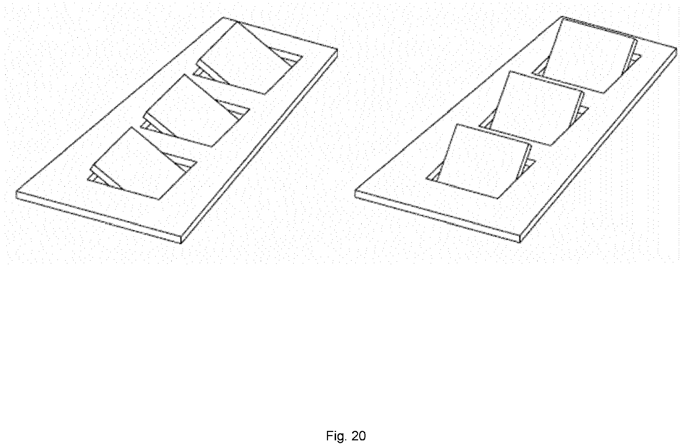

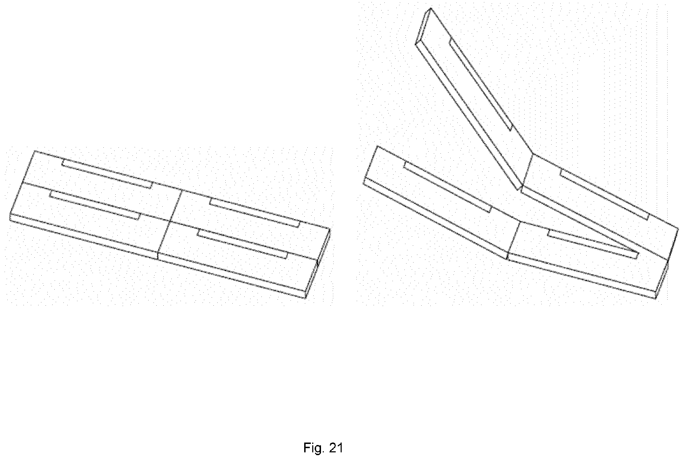

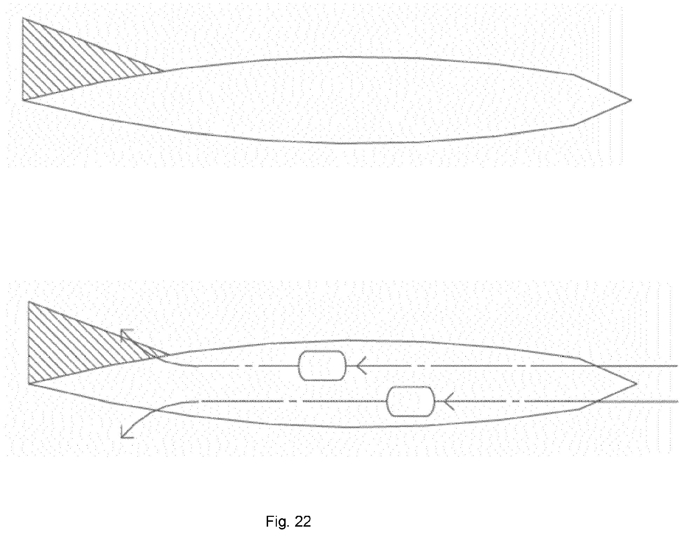

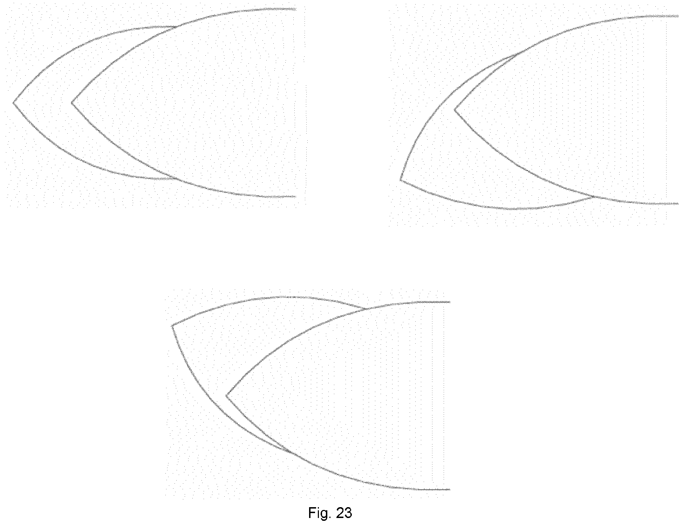

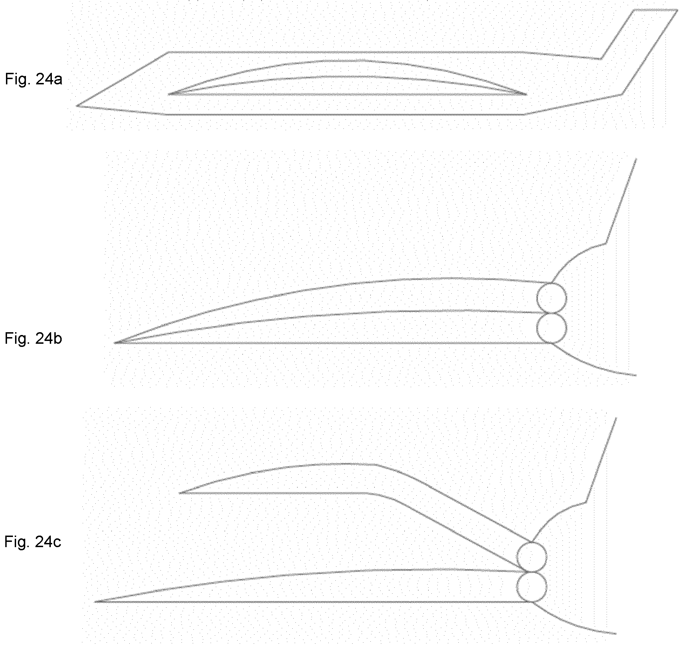

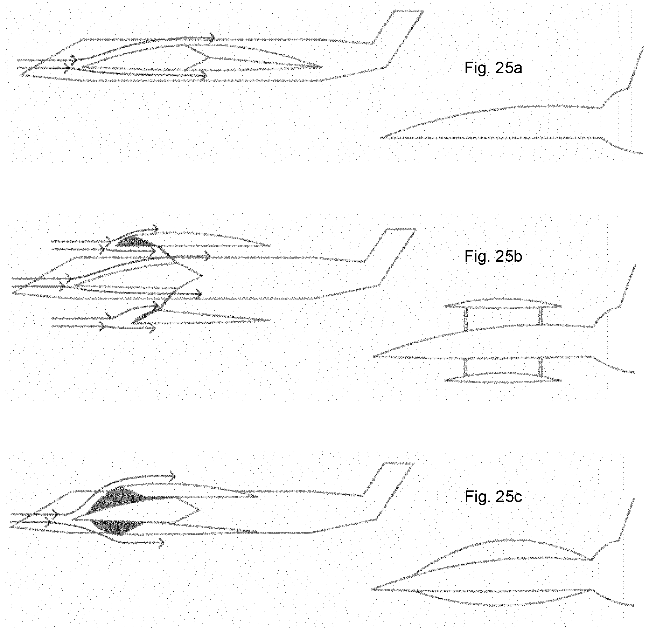

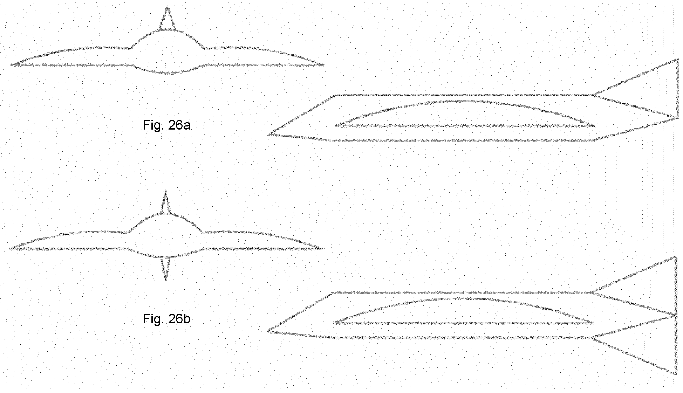

The following detailed description relates to a preferred embodiment of an aircraft equipped with a propulsion system of the present invention as indicated in Figures 1-38.

In particular, an axonometric view of a portion of an embodiment of an aircraft according to the present invention is shown, in which a housing 2 is visible, provided on its inside with at least one first propeller and one second propeller (or blade) 3, 3' and capable to rotate opposite to each other. Each of the first and second propeller 3, 3' is connected to an independent thrust vector 4 (rotor or turbine), and to one of its corresponding supply. Each of the first and second propeller 3, 3' has mobility that is independent with respect to two mutually orthogonal axes, as they can move both in the horizontal direction and on the vertical plane with respect to the frame of the aircraft 1, and this can happen also in symbiosis with respect to the wings 8 and other aerodynamic parts.

The lift of the propellers 3, 3' is different to one another; in fact, the propellers are equipped with an inverted aerodynamic load as the lower propeller has an opposed aerodynamic load which extracts the air from underneath to throw it inside the compartment of the housing 2 that will manage it and throw it away in a direction serving to increase the speed.

The size of the housing 2 is such as to allow a maximum extension of each propeller 3, 3' at its inside and to allow the transfer of the air flow 5 emitted from one of the propellers 3, 3' at the input to the other propeller. The size of the propellers 3, 3' can be varied to suit the size of the housing 2.

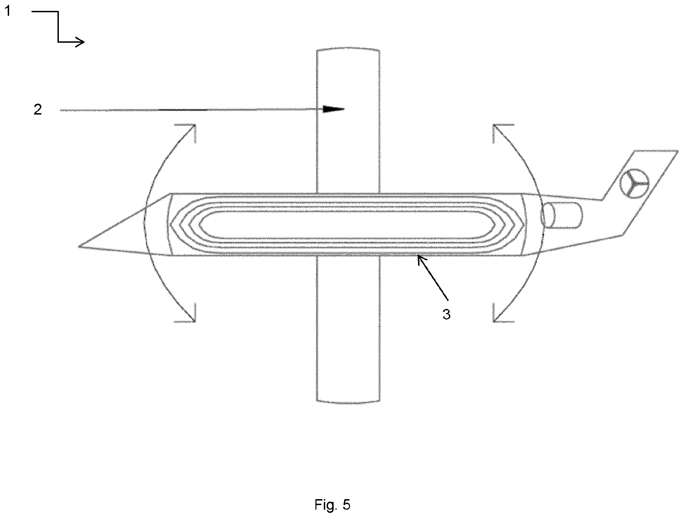

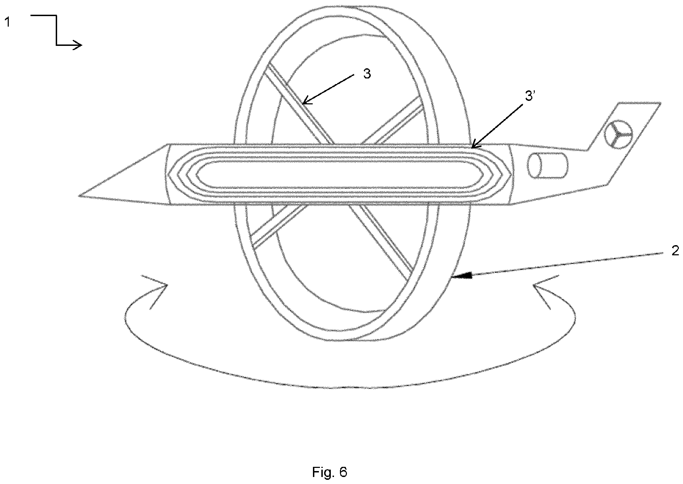

The housing 2, and with it the propellers 3, 3' contained inside it, is capable to assume various inclinations with respect to the plane of the aircraft (see Figs. 1, 3, 4) and to rotate around the vertical axis (see Fig. 5) and around the horizontal axis (see Fig. 6).

By differently inclining the housing 2 of the thrust vectors 4, even the propellers 3 that initially can be laterally placed can be moved up to 90° in order to be frontally placed; they can therefore move within the perimeter of the frame to find a better position for aerodynamic needs.

Figures 7a and 7b show in detail the two independent blocks of propellers 3 and 3' in their rest position (Figure 7a) and subjected to rotation (Figure 7b), where the inclination assumed by the housing 2 can be seen.

Returning to Figures 1-3 the airflow 5 entering the housing 2 is visible. The air know 5 can be made out, depending on the needs, in one case through the outlet openings 6 arranged in the rear part of the aircraft or, alternatively, in another case through the outlet openings 7 located in the lateral part of the aircraft.

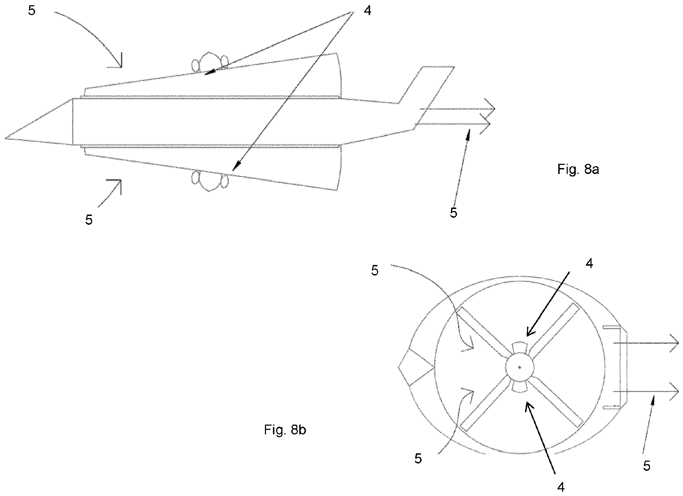

In Figures 8a and 8b a side view and a top view respectively further show how the output of the air flow 5 from the aircraft is managed depending on the needs. The thrust vector is positioned at the center of the housing 2 and around it according to the needs the frame is made, which is highly managed with two counter-rotating engines which can move in both the horizontal and vertical planes, giving a maximum aerodynamic flow management. In any case, they can also move in opposite directions, namely by tilting and pivoting on the same point. This allows to collect a huge air flow 5 and handle it, making sure to expel it just in one direction, so further increasing its speed. In another embodiment it is possible to obtain a change in the directionality of the aircraft, by managing the output of the air flow 5 not only from the rear side of the aircraft, but also in other directions in a sudden and highly performing way.

In Figures 1-3 furthermore also additional rotors 9 are shown which slide horizontally along suitable guide rails 12, with their relative tail stabilizers 10, and the fuselage 11, the additional turbines 13 and the wings 8, provided with movable elements for their extension 14.

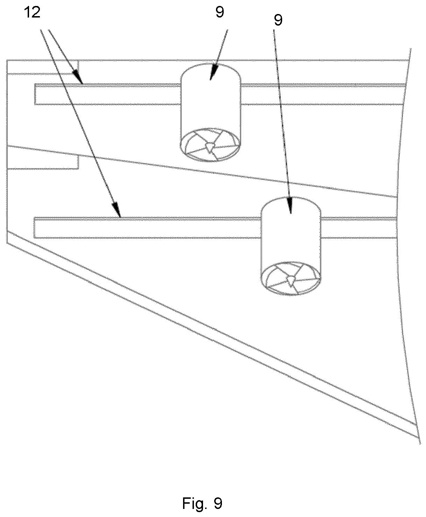

The additional rotors 9 are used to stabilize the aircraft 1 should there be any problem with the rotation of one of the two propellers 3, 3'. The additional rotors 9, like the main rotors 4, are also capable of moving on their own axis. Figure 9 shows in detail the additional rotors 9 and the guides 12 on which they slide horizontally.

The stabilizers 10 may be in the open or closed position for a more complete management of air flow according to the needs.

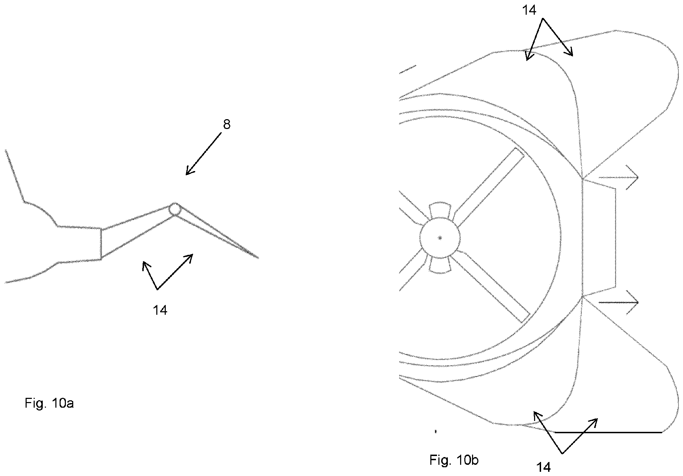

Figures 10a and 10b show in detail the wings 8 and the movable elements for their extension 14; the composition and modularity of the wings 8 are highlighted, by highlighting the telescopic extension of the movable elements 14, for increasing not only the wing loading but also the space dedicated to bring people and objects inside the aircraft by increasing the inner surface.

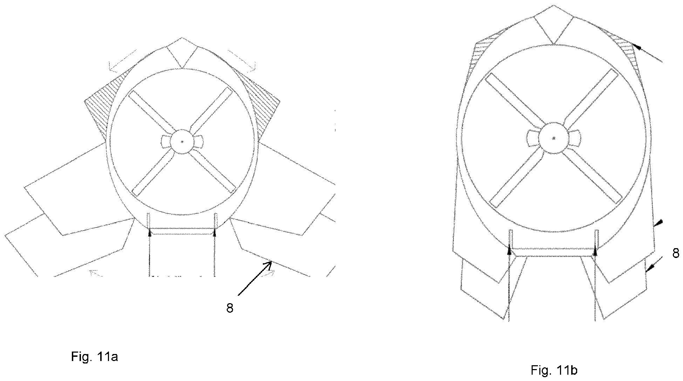

Figures 11a and 11b show top views respectively of the movable wings 8 in the open position and closed position; in the case of the open position of the wings 8 (Figure 11a), the aircraft assumes a shape with a more marked amplitude, whereas in the case of closed wings 8 (Figure 11b) the aircraft assumes a more elongated shape, with a notable change of wing field.

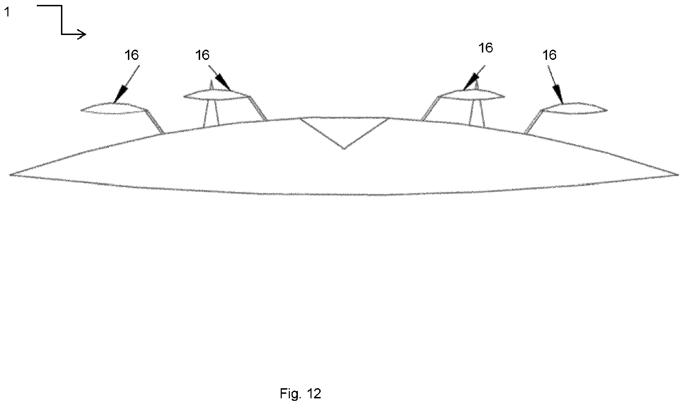

Figure 12 shows in detail the additional wings 16 which rise from the frame itself; the profile of the aircraft is therefore changed. They can be useful, for example, during take-off or landing, where it is important to have a greater or smaller amount of aerodynamic load. They allow then to differently manage in space and time the air flow 5 depending on the needs.

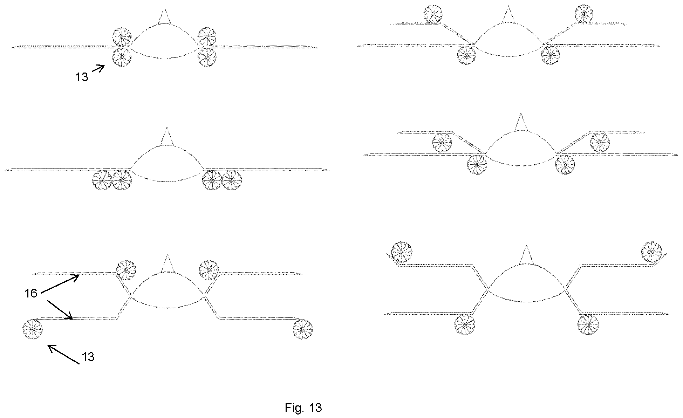

In Figure 13 shown six alternative embodiments of the aircraft of the present invention are shown, in which four additional turbines, each generally indicated with the term 13, are arranged in various positions of the additional wings 16 of Figure 12. Then the various possible combinations are shown between the mobility of the vector 4 in a horizontal way and the mobility of wing 8 on which it is positioned, so offering a great thrust variability for managing the aerodynamic flow.

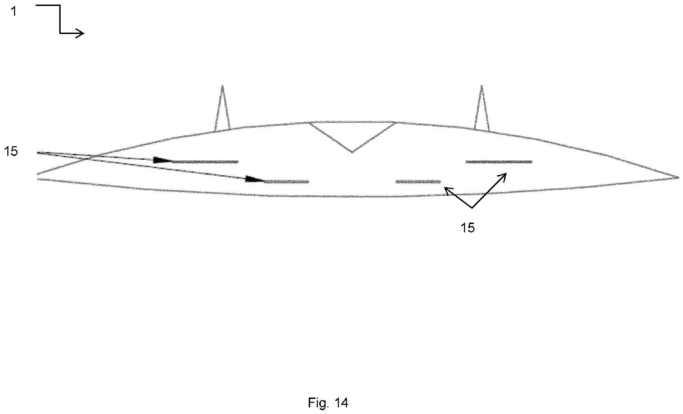

In Figure 14 some slots 15 are shown for the entry of air directed to the turbines 4 and for the management of the air flow 5, which are arranged either through the fuselage 11 itself or through the wings 8; therefore a greater air flow is provided, which is used for the generation of motion of one or more turbines 4.

One person skilled in the art will certainly comprise many modifications and variants of the above described preferred embodiments, by still remaining within the scope of the invention.

Therefore, the present invention is not limited to the preferred embodiments here described, shown only for exemplary and not limitative purposes, but is defined by the following claims.

## Claims

1. Aircraft (1) provided with a propulsion system comprising a housing (2) provided at its inside of at least a first propeller and a second propeller (3, 3') configured to rotate one opposite the other, in which each of said first and second propellers (3, 3') is connected to an independent thrust vector (4) and to one of its corresponding supply.

2. Aircraft (1) according to claim 1, in which each of said first and second propellers (3, 3') has an independent mobility with respect to two mutually orthogonal axes.

3. Aircraft (1) according to any one of the preceding claims in which the size of said housing (2) is such as to allow the maximum extension of each of said first and second propellers (3, 3') in its inside and to allow the transfer of air flow (5) emitted by each of said propellers (3, 3') at the entry to the other propeller, and vice versa.

4. Aircraft (1) according to any one of the preceding claims in which said housing (2), and with it said first and second propellers (3, 3') housed in its inside, is able both to take various tilt positions with respect to the plane of the aircraft and to be arranged both in a vertical and horizontal plane.

5. Aircraft (1) according to any one of the preceding claims, provided with at least one first opening (6) for the air outlet positioned at the rear of the aircraft and of at least one second opening (7) for the air outlet positioned at the side of the aircraft.

6. Aircraft (1) according to any one of the preceding claims further comprising wings (8) and other aeronautical components provided with movable modular elements able to move in an integral manner to said housing (2), in which said wings (8) and other aeronautical components are of the movable, retractable, telescopic, modular, extendable type, through mechanical and/or chemical systems.

7. Aircraft (1) according to any one of the preceding claims, in which each of said independent thrust vectors (4) can be a rotor or a turbine and is capable of moving either along its own axes or guides, or integrally with said wings (8) or other aeronautical components.

8. Aircraft (1) according to any one of the preceding claims further comprising additional rotors or turbines (9) capable to balance the aircraft in case of differences of rotation speed and of said main rotors (4) .

9. Aircraft (1) according to any one of the preceding claims in which said aircraft and additional movable parts (8) of which it is provided have a flat outer surface in order to take advantage of the Magnus effect both on a static and amplified surface.

10. Aircraft (1) according to any one of the preceding claims in which the load spaces of said aircraft are located at the outside of said housing (2).
